# EUROPÄISCHE PATENTSCHRIFT

(11) **EP 1 568 551 B1**
(45) Veröffentlichungstag und Bekanntmachung des Hinweises auf die Patenterteilung: **04.04.2007**
(21) Anmeldenummer: 05002869.5
(22) Anmeldetag: 11.02.2005
(51) Int. Cl.: B60R 21/34

(54) **Fahrzeug-Sicherheitsvorrichtung, insbesondere zum Anheben einer Motorhaube eines Kraftfahrzeugs**
Vehicle safety device, in particular for raising the vehicle bonnet
Dispositif de sécurité pour véhicule, notamment pour soulever le capot

(30) Priorität: 28.02.2004 DE 102004009768
(43) Veröffentlichungstag der Anmeldung: 31.08.2005
(73) Patentinhaber: Bayerische Motoren Werke Aktiengesellschaft, 80809 München (DE)
(72) Erfinder: Köstler, Ulrich, 85241 Hebertshausen (DE); Mayr, Jürgen, 80807 München (DE); Knechtel, Marcus, 85774 Unterföhring (DE); Tietel, Andreas, 81375 München (DE); Korkusuz, Haci, 81671 München (DE)

(56) Entgegenhaltungen:
- EP-A- 1 238 893
- DE-A1- 10 116 716
- DE-A1- 10 314 180
- DE-A1-3102004 002 21
- DE-U1- 20 314 673
- DE-U1- 29 924 467

## Beschreibung

### Hintergrund der Erfindung

Die Erfindung betrifft eine Fahrzeug-Sicherheitsvorrichtung mit mindestens einem Aktorelement, insbesondere einem Stößel, zum Bewegen eines Bauteils der Außenhaut eines Fahrzeugs bei einem Aufprall, insbesondere zum Anheben einer Motorhaube eines Kraftfahrzeugs bei einem Personenaufprall, einem am Fahrzeug abzustützenden Widerlager, an dem das Aktorelement verschiebbar gelagert ist, einem Druckspeicher zum Bewegen des Aktorelements und einer Verriegelungseinrichtung, mit der das Aktorelement in einer vorgespannten Stellung arretierbar ist, siehe EP-A-1 238 893.

Bei der konstruktiven Gestaltung und Auslegung von modernen Fahrzeugen bzw. Automobilen wird großer Wert darauf gelegt, dass bei einem Unfall eine auf die Außenhaut des Fahrzeugs auftreffende Person möglichst unverletzt bleibt. Eine besondere Gefahr stellt bei einem solchen Unfall das Aufprallen der Person mit ihrem Kopf auf der Außenhaut des am Unfall beteiligten Fahrzeugs dar. Diese Gefahr besteht beispielsweise, wenn ein Fußgänger, ein Radfahrer oder ein Motorradfahrer von einem Fahrzeug erfasst und der Kopf des Unfallteilnehmers gegen die Motorhaube des Unfallfahrzeugs geschleudert wird.

Bei modernen Fahrzeugen ist insbesondere zwischen der Motorhaube und einem darunter liegenden Antriebsaggregat, beispielsweise einem Verbrennungsmotor, für eine genügend große Deformation der Motorhaube nicht ausreichend Raum. Es besteht daher ein großes Risiko, dass ein aufprallender Kopf eine hohe biomechanische Belastung erfährt und auf das Antriebsaggregat "durchschlägt". Zur Beurteilung einer solchen Gefahr des "Durchschlagens" eines aufprallenden Kopfes werden in Versuchsreihen so genannte HIC-Werte ermittelt, mittels denen die biomechanische Belastung klassifiziert werden kann.

Als Möglichkeit eines verbesserten Personenschutzes ist es bekannt, die Motorhaube bzw. Frontklappe eines Fahrzeugs um mehrere Zentimeter anzuheben, sobald ein Unfall mit einem möglichen Personenaufprall detektiert wird. Durch das Anheben der Motorhaube wird der Abstand zu einem darunter liegenden Aggregat vergrößert und ferner durch die zusätzliche Bewegung der Motorhaube und die damit verbundenen Federkräfte und Massenträgheiten ein Energieabbau über einen vergleichsweise großen Weg erzeugt. Das damit erzielte Verzögerungsniveau für einen aufschlagenden Kopf einer Person sinkt auf einen biomechanisch verträglicheren Wert und ein "Durchschlagen" auf ein unter der Motorhaube angeordnetes hochsteifes Antriebsaggregat im Vorderbau des Fahrzeugs wird verhindert. Das Anheben der Motorhaube bzw. ein ebenfalls mögliches Ausstellen eines Bauteils der Außenhaut des Fahrzeugs wird dabei durch ein Signal eingeleitet, das von einem Sensor bei Berührung durch einen am Frontend des Fahrzeugs anstoßenden Körper einer Person erzeugt wird.

Aufgrund möglicherweise auftretender Fehlauslösungen (z.B. einer Kollision mit einem Streckenbegrenzungspfosten oder einem sonstigen Hindernis) soll die Ausstell- bzw. Anhebebewegung des Bauteils der Außenhaut des Fahrzeugs problemlos von Kundenhand ohne Benutzung von Werkzeug reversierbar sein.

Ferner ist es erforderlich, dass die für das Bewegen eines Bauteils der Außenhaut des Fahrzeugs vorgesehene Fahrzeug-Sicherheitsvorrichtung mit hoher Genauigkeit und ohne besonderen Aufwand binnen kürzester Zeit ausgelöst werden kann. Darüber soll die Fahrzeug-Sicherheitsvorrichtung ein geringes Bauvolumen, eine hohe Betriebssicherheit bei widrigen Umgebungsbedingungen und vergleichsweise geringe Herstellungs- und Wartungskosten aufweisen.

### Zugrundeliegende Aufgabe

Aufgabe der Erfindung ist es daher eine Fahrzeug-Sicherheitsvorrichtung der oben genannten Art bereitzustellen, deren Aktoren ohne Verwendung von Bordwerkzeug auch wieder rückgestellt werden können.

### Erfindungsgemäße Lösung

Die Aufgabe ist erfindungsgemäß mit einer Fahrzeug-Sicherheitsvorrichtung der eingangs genannten Art gelöst, bei der eine Rückstelleinrichtung vorgesehen ist, mittels der das Aktorelement durch ein Öffnen und nachfolgendes Schließen der Motorhaube des Fahrzeugs bzw. durch ein weiteres Ausstellen und Rückbewegen des Bauteils der Außenhaut des Fahrzeugs in seine vorgespannte Stellung bewegt werden kann.

Durch das erfindungsgemäße Nutzen der Öffnungs- und Schließbewegung beispielsweise einer Motorhaube können Hebelwirkungen genutzt werden, mit denen manuell vergleichsweise hohe Kräfte erzeugt werden können. Auf diese Weise kann erfindungsgemäß der Stößel bzw. Aktor einer Fahrzeug-Sicherheitsvorrichtung ohne Verwendung von Bordwerkzeug auch wieder rückgestellt werden. Damit das Aktorelement bzw. der Stößel in seine vorgespannte Stellung bewegt wird, muss zum Rückstellen grundsätzlich die vom Stößel beim Ausfahren erzeugte Druckkraft von ca. 800 N überwunden werden. Diese vergleichsweise hohe Kraft kann durch das Öffnen und Schließen einer Motorhaube eines Fahrzeugs manuell vergleichsweise leicht erzeugt werden.

Die erfindungsgemäße Rückstelleinrichtung sollte möglichst mit einem Getriebe versehen sein, das insbesondere eine Untersetzung aufweist, sodass die zum Rückstellen des Druckspeichers der Fahrzeug-Sicherheitsvorrichtung erforderliche Druckkraft im Verhältnis zur Druckkraft des Druckspeichers gering ist. Mit einem solchen Untersetzungsgetriebe wird eine vergleichsweise geringe Kraft, beispielsweise von kleiner als 100 N, über einen größeren Weg erzeugt und auf diese Weise der Stößel der erfindungsgemäßen Fahrzeug-Sicherheitsvorrichtung wieder rückgestellt. Zum Rückstellen sollte das genannte Getriebe vorteilhaft das Druckelement der Fahrzeug-Sicherheitsvorrichtung schwenken und dabei über das am Druckelement angelenkte Zugelement den Stößel in seine vorgespannte Stellung ziehen.

Damit die erfindungsgemäße Fahrzeug-Sicherheitsvorrichtung trotz Rückstelleinrichtung nur einen vergleichsweise kleinen Bauraum benötigt, sollte die Rückstelleinrichtung mittels eines Rollelements. Insbesondere eines Zahnrades gebildet sein, das von einem Hebel schwenkbar ist und an eine das Druckelement schwenkbare Rollbahn, beispielsweise in Gestalt eines Zahnkranzes, angreift. Der Zahnkranz kann beispielsweise eine Viertelronde mit Verzahnung sein, die einstückig mit dem Druckelement gestaltet ist.

Damit während des Ausfahrens des Stößels der Fahrzeug-Sicherheitsvorrichtung insgesamt eine vergleichsweise kleine Masse bewegt wird, sollte eine Kupplung zum Trennen der drehmomentübertragenden Verbindung zwischen dem Hebel und dem Rollelement zumindest während des Ausfahrens des Stößels vorgesehen sein. Die Kupplung kann beispielsweise mit einer flächigen Rastverzahnung gestaltet sein, die sich zwischen zwei Kupplungsscheiben befindet. Das Abkuppeln der erfindungsgemäßen Rückstelleinrichtung während des Ausfahrens des Stößels ist ferner vorteilhaft, weil auf diese Weise die Rückstelleinrichtung erst nach einem vollständigen Ausfahren des Stößels ausgefahren werden kann. Das Ausfahren der Rückstelleinrichtung geschieht beispielsweise durch das Öffnen der Motorhaube. Wenn die Motorhaube von einem Benutzer des Fahrzeugs geöffnet worden ist, steht für das Ausfahren der Rückstelleinrichtung ferner ein vergrößerter Freiraum zur Verfügung, sodass diese über die oben genannte vergleichsweise große Wegstrecke ausgefahren werden kann und dann mit Hilfe des erwähnten Getriebes die für das Rückstellen erforderliche, vergleichsweise geringe Druckkraft über diesen größeren Weg erzeugt werden kann.

Der Hebel der erfindungsgemäßen Rückstelleinrichtung bzw. eine ihn bewegende Mechanik sollte also erst nach einem vollständigen Ausfahren des Stößels ausfahrbar sein. Mit anderen Worten sollte die genannte Kupplung also betätigt werden, wenn der Hebel bzw. eine ihn bewegende Mechanik der Rückstelleinrichtung ganz eingefahren ist und sich der Stößel in seiner vorgespannten Stellung befindet. Dies ist möglich, indem der Hebel bzw. eine ihn bewegende Mechanik beim Einschieben geringfügig überdrückt wird und dadurch die genannte Kupplung öffnet. Dafür kann vorteilhaft an einer den Hebel bewegenden Mechanik in Gestalt eines Reversierstempels eine Laufbahn angeordnet sein, an der ein am Hebel angelenktes Rollelement abrollt. Durch eine an der Laufbahn ausgestaltete Überdrückanformung wird dann am Ende des Einschiebens der Rückstelleinrichtung die Kupplung geöffnet. Umgekehrt wird die Kupplung wieder geschlossen, wenn der Stößel der erfindungsgemäßen Fahrzeug-Sicherheitsvorrichtung nahezu am Ende seiner Ausfahrbewegung angelangt ist.

Bei einer solchen Fahrzeug-Sicherheitsvorrichtung sollte die Verriegelungseinrichtung besonders kostengünstig und klein sein, dennoch aber den zugehörigen Stößel zum Bewegen des Bauteils der Außenhaut sicher und präzise freigeben. Dies kann erreicht werden, indem die Verriegelungseinrichtung vorteilhaft mit einem am Widerlager schwenkbar gelagerten Druckelement und einem am Stößel angelenkten Zugelement gebildet ist, die nach Art einer Kniehebelmechanik miteinander gelenkig verbunden sind. Ferner ist die Aufgabe mit einem Bauteil der Außenhaut eines Fahrzeugs, insbesondere einer Motorhaube eines Kraftfahrzeugs, gelöst, das bzw. die mit einer solchen erfindungsgemäßen Fahrzeug-Sicherheitsvorrichtung versehen ist.

Mit anderen Worten ist die erfindungsgemäße vorteilhafte Verriegelungseinrichtung einer Fahrzeug-Sicherheitsvorrichtung mit einer Kniehebelmechanik gestaltet, die als einen ersten Verriegelungshebel ein Druckelement umfasst, welches an einem Widerlager beispielsweise am Fahrzeugchassis abgestützt ist. An dem dem Widerlager gegenüberliegenden Endbereich des Druckelements bzw. Druckhebels ist ein Zugelement beispielsweise in Gestalt eines Zughebels angelenkt, mit dem durch ein Schwenken des Druckhebels der Stößel in seine vorgespannte Stellung gezogen werden kann.

Wenn durch das Schwenken der Druckhebel und der Zughebel nahezu in Deckung gebracht sind, so wirkt an ihnen nur ein vergleichsweise geringes Drehmoment und es wird dennoch eine hohe Zugkraft aufgenommen, mit der der Stößel in seine vorgespannte Stellung gehalten wird. In einer solchen Stellung liegt die Kniehebelmechanik also nahe bei ihrem Totpunkt. In dieser Stellung wird die erfindungsgemäße Verriegelungseinrichtung nun fixiert.

Für das Halten der Verriegelungsstellung ist erfindungsgemäß also nur eine sehr geringe Kraft erforderlich, und daher ist für das Lösen der Verriegelungseinrichtung auch nur ein vergleichsweise geringer Widerstand zu überwinden.

Zum Halten der erfindungsgemäßen Verriegelungseinrichtung mit ihrem Druckelement und Zugelement ist insbesondere eine Drehfalle vorteilhaft, die beispielsweise mit einer Sperrklinke gehalten werden kann, die von einem Elektromagneten zum Freigeben der Drehfalle bewegt wird. Die Drehfalle kann z.B. am Verbindungsgelenk zwischen dem Druckelement und dem Zugelement angreifen und dieses freigeben. Beim Freigeben wird das Verbindungsgelenk gleichzeitig vom oben genannten Totpunkt der Kniehebelmechanik entfernt und der vorgespannte Stößel kann sich nahezu frei in Richtung auf seine ungespannte Stellung bewegen. Durch die Bewegung stellt der Stößel dann das zugehörige Bauteil der Außenhaut des Fahrzeugs aus oder hebt dessen Motorhaube an.

Als Druckspeicher für die erfindungsgemäße Fahrzeug-Sicherheitsvorrichtung eignet sich insbesondere ein Federelement, denn Federelemente weisen auch bei widrigen Umgebungsbedingungen eine hohe Betriebssicherheit auf. Damit die zum Anheben einer Motorhaube eines Kraftfahrzeugs erforderliche Kraft und Beschleunigung erzielt wird, sind an der Motorhaube vorteilhaft insgesamt vier Stößel mit zugehörigen Verriegelungseinrichtungen vorgesehen, die einzeln je einen Aktor bilden, welcher eine Druckkraft von jeweils ca. 800 N bereitstellt und die Motorhaube mindestens 40 mm bewegen kann. Diese Bewegung der Motorhaube sollte innerhalb von 40 ms abgeschlossen sein.

Damit wie erwähnt auch mehrere Stößel einer Fahrzeug-Sicherheitsvorrichtung mit zugehörigen Verriegelungseinrichtungen nahezu zeitgleich ausgelöst werden können und auf diese Weise das damit bewegte Bauteil der Außenhaut des Fahrzeugs an mehreren Stellen zugleich beschleunigt wird, sollten die Verriegelungseinrichtungen mit Hilfe mindestens eines Bowdenzuges gekoppelt sein, über den bzw. die dann die Entriegelungsbewegung von einem Aktor der Fahrzeug-Sicherheitsvorrichtung auf einen anderen übertragen werden kann. Darüber hinaus kann mit Hilfe eines Bowdenzuges auch ein an der Motorhaube angeordnetes Schloss geöffnet werden, damit sich die Motorhaube des Kraftfahrzeugs zumindest über eine definierte Wegstrecke aus ihrer geschlossenen Stellung heraus bewegen kann. Darüber hinaus ist es vorteilhaft, wenn an einem Aktor der erfindungsgemäßen Fahrzeug-Sicherheitsvorrichtung das Schloss der Motorhaube integriert ist und dann der Stößel des Aktors sowie ein Hakenelement des Schlosses z.B. über einen Winkelhebel und eine Drehfalle gemeinsam gelöst bzw. geöffnet werden. Auf diese Weise ist insgesamt eine vergleichsweise kleine Fahrzeug-Sicherheitsvorrichtung geschaffen, in der alle für das Bewegen eines Bauteils der Außenhaut des Fahrzeugs erforderlichen Elemente untergebracht sind. Die Fahrzeug-Sicherheitsvorrichtung kann daher vergleichsweise kostengünstig hergestellt und auch montiert werden. Da im Wesentlichen erfindungsgemäß nur mechanische Elemente verwendet worden sind, weist die Fahrzeug-Sicherheitsvorrichtung gemäß der Erfindung eine hohe Betriebssicherheit auf. Diese Betriebssicherheit ist trotz der im Motorraum eines Fahrzeugs vorherrschenden widrigen Umgebungsbedingungen über die gesamte Lebensdauer des Fahrzeugs gewährleistet.

### Kurzbeschreibung der Zeichnungen

Nachfolgend werden Ausführungsbeispiele einer erfindungsgemäßen Fahrzeug-Sicherheitsvorrichtung anhand der beigefügten schematischen Zeichnungen näher erläutert. Es zeigt:
- Fig. 1a: eine Seitenansicht eines ersten Ausführungsbeispiels einer erfindungsgemäßen Fahrzeug-Sicherheitsvorrichtung in der vorgespannten und verriegelten Stellung des zugehörigen Stößels,
- Fig. 1b: die Ansicht gemäß Figur 1 a während einer Ausfahrbewegung des zugehörigen Stößels,
- Fig. 2a: eine Seitenansicht der Fahrzeug-Sicherheitsvorrichtung gemäß Figur 1 a mit einer daran angeordneten Rückstelleinrichtung während einer Rückstellbewegung,
- Fig. 2b: die Ansicht gemäß Figur 2a während des Endes der Rückstellbewegung,
- Fig. 3a: eine Seitenansicht der Fahrzeug-Sicherheitsvorrichtung gemäß Figur 1 a mit einem daran angeordneten verriegelten Schloss,
- Fig. 3b: die Ansicht gemäß Figur 3a mit dem Schloss in entriegeltem Zustand, und
- Fig. 4: ein zweites Ausführungsbeispiel einer erfindungsgemäßen Fahrzeug-Sicherheitsvorrichtung mit zwei durch Bowdenzüge verbundenen Aktoren.

### Detaillierte Beschreibung der Ausführungsbeispiele

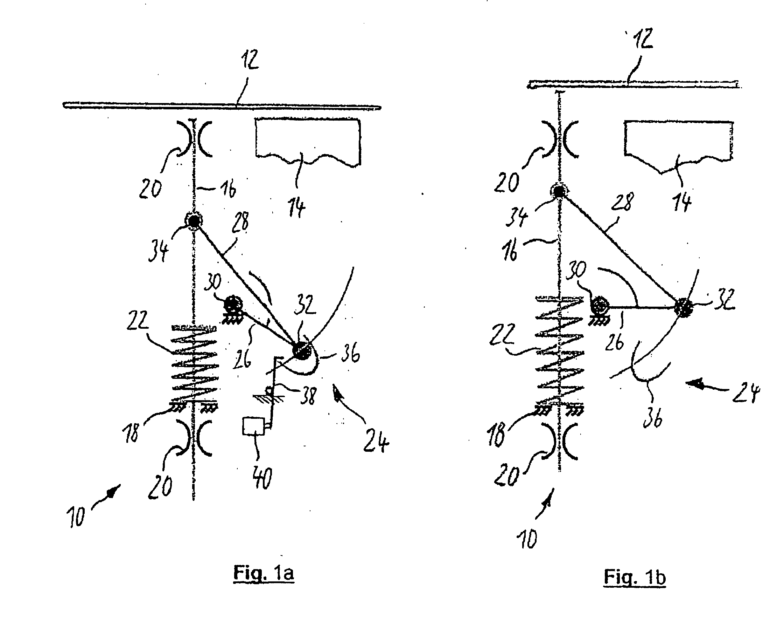

In den Figuren 1 a bis 4 sind Fahrzeug-Sicherheitsvorrichtungen 10 veranschaulicht, mittels denen im Falle eines Unfalls beim Aufprall einer Person am zugehörigen Kraftfahrzeug dessen Motorhaube 12 sehr schnell einige Zentimeter angehoben werden kann. Bei angehobener Motorhaube 12 liegt zwischen dieser und einem darunter angeordneten Antriebsaggregat 14 ein größerer Abstand vor, so dass ein Durchschlagen insbesondere des Kopfes der am Unfall beteiligten Person auf das Antriebsaggregat 14 verhindert werden kann.

Die Fahrzeug-Sicherheitsvorrichtungen 10 weisen als wesentliches Bauelement jeweils ein Aktorelement in Gestalt eines Stößels 16 auf, der an einem Widerlager 18 des weiter nicht dargestellten Chassis des Kraftfahrzeugs abgestützt und in ebenfalls am Chassis angeordneten Führungen 20 verschiebbar geführt ist. Der Stößel 16 ist gegenüber dem Widerlager 18 mit Hilfe eines Druckspeichers 22 in Gestalt einer Spiralfeder abgestützt, die im vorgespannten Zustand einen Energiespeicher zum Bewegen des Stößels 16 für den Fall des genannten Personenaufpralls bildet. Der Druckspeicher 22 ist derart gestaltet und ausgelegt, dass der Stößel 16 innerhalb von ca. 40 ms über eine Wegstrecke von ca. 40 mm bewegt wird und dabei eine Druckkraft von ca. 800 N erzeugt.

Damit der Stößel 16 in der in Figur 1 a dargestellten vorgespannten Stellung arretierbar ist und dennoch die Fahrzeug-Sicherheitsvorrichtung 10 vergleichsweise leicht ausgelöst werden kann, ist eine Verriegelungseinrichtung 24 vorgesehen, die insbesondere mit einem Druckelement 26 in Form eines Druckhebels und einem Zugelement 28 in Gestalt eines Zughebels ausgebildet ist. Das Druckelement 26 ist an einem ersten Gelenk 30 am Chassis abgestützt und an einem zweiten Gelenk 32 an seinem gegenüberliegenden Endbereich mit dem Zugelement 28 gelenkig verbunden. Dieses Zugelement 28 ist seinerseits am gegenüberliegenden Endbereich an einem dritten Gelenk 34 am Stößel 16 angelenkt.

Auf diese Weise ist mit dem Druckelement 26 und dem Zugelement 28 insgesamt eine Kniehebelmechanik gebildet, bei der das Druckelement 26 ein kürzeres Hebelelement und das Zugelement 28 ein vergleichsweise langes Hebelelement bilden. Die Hebel der Kniehebelmechanik können in die Nähe eines Totpunktes bewegt werden, wie es in Figur 1a dargestellt ist, und weisen in dieser Lage ein vergleichsweise geringes Haltemoment um das erste Gelenk 30 bzw. das dritte Gelenk 34 auf. Das Druckelement 26 und das Zugelement 28 können daher in dieser Lage mit vergleichsweise geringem Kraftaufwand von einer Drehfalle 36 leicht gehalten werden, die an dem zweiten Gelenk 32 angreift.

Die Drehfalle 36 ist mit Hilfe einer Sperrklinke 38 arretiert, die von einem Elektromagneten 40 bewegt werden kann, wodurch die Drehfalle 36 und damit auch die Verriegelungseinrichtung 24 freigegeben wird.

Indem die schwenkende Drehfalle 36 das zweite Gelenk 32 freigibt, rotiert das Druckelement 26 in Richtung zur Motorhaube 12 und das ebenfalls bewegte Zugelement 28 lässt den Stößel 16 sich in Richtung auf diese Motorhaube 12 bewegen. Die im Druckspeicher 22 gespeicherte Energie drängt den Stößel 16 mit hoher Kraft gegen die Motorhaube 12, die dadurch beschleunigt und vom Antriebsaggregat 14 wegbewegt wird.

Mit der Bewegung der Motorhaube 12 vergrößert sich der Abstand zwischen dem Antriebsaggregat 14 und der Motorhaube, wodurch sichergestellt ist, dass ein während eines Unfalls auf die Motorhaube 12 aufschlagender Kopf einer am Unfall beteiligten Person nicht gefährlich hohe biomechanische Belastungen erfährt.

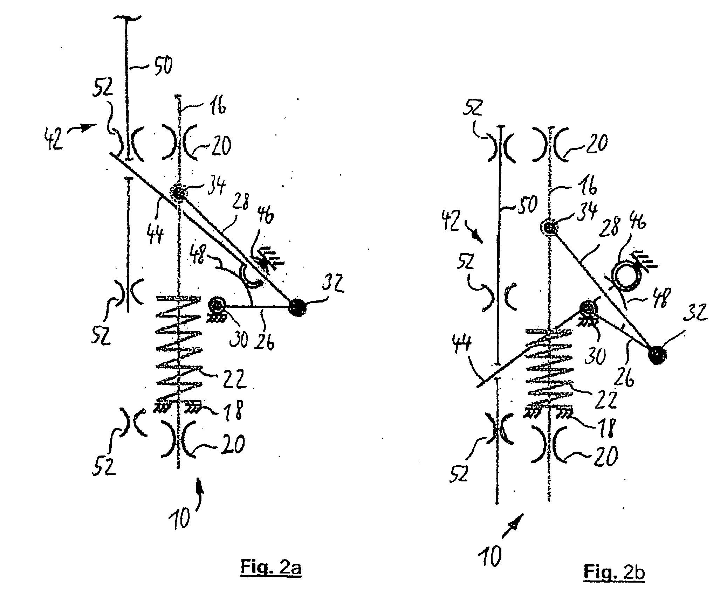

Damit der während eines Unfalls, aber auch während einer möglichen Fehlauslösung der Fahrzeug-Sicherheitsvorrichtung 10 ausgefahrene Stößel 16 mit vergleichsweise geringer Kraft und ohne Benutzung von Bordwerkzeug auch von einem Benutzer des zugehörigen Fahrzeugs wieder rückgestellt werden kann, ist an der Fahrzeug-Sicherheitsvorrichtung 10 eine Rückstelleinrichtung 42 vorgesehen (siehe Fig. 2a und 2b), die nach Art eines Untersetzungsgetriebes arbeitet und das Rückstellen des Stößels 16 über einen vergleichsweise großen Hebelweg ermöglicht. Der Hebelweg wird bereitgestellt, indem ein Benutzer des Kraftfahrzeugs die vom Stößel 16 angehobene Motorhaube 12 vollständig öffnet und nachfolgend wieder schließt.

Die Rückstelleinrichtung 42 ist mit einem am Chassis abgestützten und drehbar gelagerten Hebel 44 gebildet, der zum Drehen eines Rollelements 46 in Gestalt eines Zahnrades dient. Das Rollelement 46 greift während des Rückstellens in einen Zahnkranz 48 in Form einer Viertelronde mit Verzahnung, die einstückig mit dem Druckelement 26 ausgebildet ist und ein Drehen des Druckelements 26 um das erste Gelenk 30 ermöglicht.

Der Hebel 44 wird beim Schließen der Motorhaube 12 mit Hilfe eines Reversierstempels 50 bewegt, der in einer Führung 52 verschiebbar gelagert ist.

Die Rückstelleinrichtung 42 bleibt während der Ausfahrbewegung des Stößels 16 in ihrer eingefahrenen Stellung und wird erst kurz vor dem vollständigen Ausfahren des Stößels 16 freigegeben und dann von einer nicht dargestellten Feder ausgefahren. Zwischen dem Hebel 44 und dem Rollelement 46 ist eine ebenfalls nicht dargestellte Kupplung vorgesehen, die im ausgefahrenen Zustand der Rückstelleinrichtung 42 eine drehmomenten-übertragende Verbindung herstellt, sodass beim Einschieben des Reversierstempels 50 und beim damit verbundenen Schwenken des Hebels 44 das Rollelement 46 gedreht wird und den Zahnkranz 48 mit dem zugehörigen Druckelement 26 schwenkt. Das Druckelement 26 zieht dadurch das Zugelement 28 und den damit verbundenen Stößel 16 in seine vorgespannte Stellung, wie es in Figur 2b dargestellt ist.

Diese vorgespannte Stellung des Stößels 16 wird erreicht, kurz bevor die Motorhaube 12 vollständig geschlossen ist.

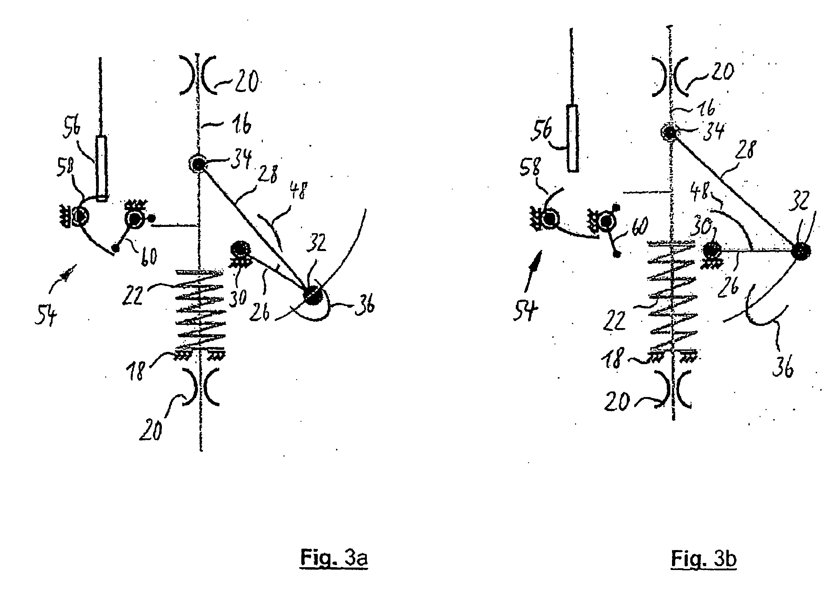

In den Figuren 3a und 3b ist veranschaulicht, dass sich ferner unmittelbar neben dem Stößel 16 der Fahrzeug-Sicherheitsvorrichtung 10 ein Schloss 54 befindet, mit dem die Motorhaube 12 im ordnungsgemäß geschlossenen Zustand gehalten wird. Das Schloss 54 ist mit einem Schlosshaken 56 versehen, der durch eine Drehfalle 58 arretiert ist. Zwischen der Drehfalle 58 und dem Stößel 16 ist ein Winkelhebel 60 vorgesehen, der durch eine Bewegung des Stößels 16 geschwenkt wird und durch diese Schwenkbewegung dann die Drehfalle 58 freigibt. Beim Drehen der Drehfalle 58 wird die Arretierung des Schlosshakens 56 gelöst und damit das Schloss 54 geöffnet, sodass sich die Motorhaube 12 wie beabsichtigt zumindest eine vorbestimmte Wegstrecke nach oben bewegen kann.

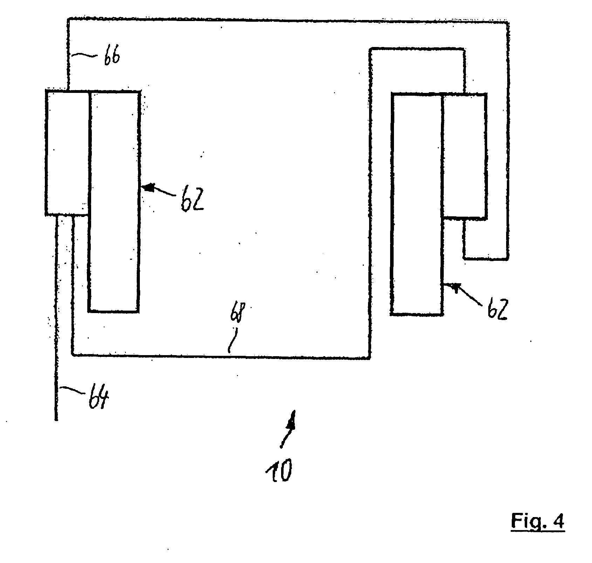

In Figur 4 ist ein Ausführungsbeispiel einer erfindungsgemäßen Fahrzeug-Sicherheitsvorrichtung 10 dargestellt, bei der zwei Aktoren 62 mit jeweils zugehörigen, weiter nicht veranschaulichten Stößeln 16, Verriegelungseinrichtungen 24 und Rückstelleinrichtungen 42 vorgesehen sind.

An einem ersten der Aktoren 62 ist ein ersten Bowdenzug 64 angeordnet, der von einem nicht dargestellten Fahrgastraum des Fahrzeugs betätigt werden kann und mittels dem die Verriegelungseinrichtung 24 des ersten Aktors 62 gelöst werden kann. Ferner sind ein zweiter und ein dritter Bowdenzug 66 bzw. 68 vorgesehen, die jeweils die Aktoren 62 an ihren Verriegelungseinrichtungen 24 miteinander koppeln. Die Bowdenzüge 66 und 68 greifen insbesondere jeweils in entgegen gesetzter Richtung an den Drehfallen 36 der Verriegelungseinrichtungen 24 an und bewirken somit, dass bei Bewegung nur einer der Drehfallen 36 von einem der Aktoren 62 sofort auch die andere Drehfalle 36 des anderen Aktors 62 bewegt wird, damit auch bei diesem Aktor 62 der zugehörige Stößel 16 freigegeben wird. Die Stößel 16 der Aktoren 62 werden also nahezu zeitgleich ausgefahren.

### Bezugszeichenliste

- 10: Fahrzeug-Sicherheitsvorrichtung
- 12: Motorhaube
- 14: Antriebs-Aggregat
- 16: Stößel
- 18: Widerlager
- 20: Führung
- 22: Druckspeicher
- 24: Verriegelungseinrichtung
- 26: Druckelement
- 28: Zugelement
- 30: erstes Gelenk
- 32: zweites Gelenk
- 34: drittes Gelenk
- 36: Drehfalle
- 38: Sperrklinke
- 40: Elektromagnet
- 42: Rückstelleinrichtung
- 44: Hebel
- 46: Rollelement
- 48: Zahnkranz
- 50: Reversierstempel
- 52: Führung
- 54: Schloss
- 56: Schlosshaken
- 58: Drehfalle
- 60: Winkelhebel
- 62: Aktor
- 64: ersten Bowdenzug
- 66: zweiter Bowdenzug
- 68: dritter Bowdenzug

## Patentansprüche

1. Fahrzeug-Sicherheitsvorrichtung (10) mit mindestens einem Aktorelement (16), insbesondere einem Stößel, zum Bewegen eines Bauteils der Außenhaut des Fahrzeugs bei einem Aufprall, insbesondere zum Anheben einer Motorhaube (12) eines Kraftfahrzeugs bei einem Personenaufprall, einem am Fahrzeug abzustützenden Widerlager (18), an dem das Aktorelement (16) beweglich gelagert ist, einem Druckspeicher (22) zum Bewegen des Aktorelements (16) und einer Verriegelungseinrichtung (24), mit der das Aktorelement (16) in einer vorgespannten Stellung arretierbar ist, **dadurch gekennzeichnet, dass** eine Rückstelleinrichtung (42) vorgesehen ist, mittels der das Aktorelement (16) durch ein Öffnen und nachfolgendes Schließen des Bauteils bzw. der Motorhaube (12) des Fahrzeugs in seine vorgespannte Stellung bewegbar ist.

2. Fahrzeug-Sicherheitsvorrichtung (10) nach Anspruch 1, **dadurch gekennzeichnet, dass** die Verriegelungseinrichtung (24) aus einem am Widerlager (18) schwenkbar gelagerten Druckelement (26) und einem am Aktorelement (16) angelenkten Zugelement (28) gebildet ist, die ferner nach Art einer Kniehebelmechanik miteinander gelenkig verbunden sind.

3. Fahrzeug-Sicherheitsvorrichtung nach Anspruch 1 oder 2, **dadurch gekennzeichnet, dass** eine Rückstelleinrichtung (42) mit einem Getriebe vorgesehen ist, das eine Untersetzung aufweist, so dass die zum Rückstellen des Druckspeichers (22) erforderliche Druckkraft im Verhältnis zur Druckkraft des Druckspeichers (22) gering ist, und mit dem insbesondere das Druckelement (26) schwenkbar ist.

4. Fahrzeug-Sicherheitsvorrichtung nach einem der Ansprüche 1 bis 3, **dadurch gekennzeichnet, dass** eine Rückstelleinrichtung (42) mit einem Rollelement (46), insbesondere einem Zahnrad, vorgesehen ist, das von einem Hebel (44) schwenkbar ist und an eine ein/das Druckelement (26) schwenkende Rollbahn, insbesondere einen Zahnkranz (48), angreift.

5. Fahrzeug-Sicherheitsvorrichtung nach Anspruch 4, **dadurch gekennzeichnet, dass** eine Kupplung zum Trennen der drehmoment-übertragenden Verbindung zwischen dem Hebel (44) und dem Rollelement (46) zumindest während des Ausfahrens des Aktorelements (16) vorgesehen ist.

6. Fahrzeug-Sicherheitsvorrichtung nach Anspruch 4 oder 5, **dadurch gekennzeichnet, dass** ein Hebel (44) bzw. eine ihn bewegende Mechanik (50) vorgesehen ist, der/die nach einem nahezu vollständigen Ausfahren des Aktorelements (16) ausfahrbar ist.

7. Fahrzeug-Sicherheitsvorrichtung nach einem der Ansprüche 2 bis 6, **dadurch gekennzeichnet, dass** ein Druckelement (26) und ein Zugelement (28) vorgesehen sind, die derart bemessen und miteinander gelenkig verbunden sind, dass sie sich in der vorgespannten Stellung des Aktorelements (16) nahe einem Totpunkt der Kniehebelmechanik befinden.

8. Fahrzeug-Sicherheitsvorrichtung nach einem der Ansprüche 2 bis 7, **dadurch gekennzeichnet, dass** eine Verriegelungseinrichtung (24) mit einer Drehfalle (36) vorgesehen ist, mittels der das Druckelement (26) und/oder das Zugelement (28) in der vorgespannten Stellung des Stößels (16) festlegbar ist.

9. Fahrzeug-Sicherheitsvorrichtung nach einem der Ansprüche 1 bis 8, **dadurch gekennzeichnet, dass** der Druckspeicher (22) ein Federelement ist.

10. Fahrzeug-Sicherheitsvorrichtung nach einem der Ansprüche 1 bis 9, **dadurch gekennzeichnet, dass** mehrere Aktorelemente (16) mit zugehörigen Verriegelungseinrichtungen (24) vorgesehen sind, die mit Hilfe mindestens eines Bowdenzuges (66; 68) nahezu zeitgleich ausgelöst werden können.

11. Bauteil der Außenhaut eines Fahrzeugs, insbesondere Motorhaube (12) eines Kraftfahrzeugs, mit einer Fahrzeug-Sicherheitsvorrichtung (10) nach einem der Ansprüche 1 bis 10.

## Claims

1. A vehicle safety device (10) comprising at least one actuator element (16), especially a tappet, for moving a component of the skin of the vehicle in the event of a collision, more especially for raising a bonnet (12) of a vehicle after a collision with a person, also comprising an abutment (18) which is braced against the vehicle and on which the actuator element (16) is movably mounted, a pressure accumulator (22) for moving the actuator element (16) and a locking device (24) for immobilising the actuator element (16) in a prestressed position, **characterised in that** a resetting device (42) is provided, whereby the actuator element (16) is movable into its prestressed position by opening and subsequently closing the component or bonnet (12) of the vehicle.

2. A vehicle safety device (10) according to claim 1, **characterised in that** the locking device (24) comprises a pressure element (26) pivotably mounted on the abutment (18) and a tension element (28) pivotably mounted on the actuator element (16), the elements being pivotably connected to one another like a toggle-lever mechanism.

3. A vehicle safety device according to claim 1 or 2, **characterised in that** a resetting device (42) is provided with a gear unit having a transmission ratio, so that the compressive force needed for resetting the pressure accumulator (22) is small compared with the compressive force of the pressure accumulator (22), and whereby more especially the pressure element (26) is pivotable.

4. A vehicle safety device according to any of claims 1 to 3, **characterised in that** a resetting device (42) is provided with a rolling element (46), especially a gearwheel, which is pivotable by a lever (44) and engages a rolling track, especially a toothed rim (48), which rotates a or the pressure element (26).

5. A vehicle safety device according to claim 4, **characterised in that** a clutch is provided for breaking the torque-transmitting connection between the lever (44) and the rolling element (46), at least while the actuator element (16) is being extended.

6. A vehicle safety device according to claim 4 or 5, **characterised in that** the lever (44) or a mechanism (50) for moving it is provided and is extendable after almost complete extension of the actuator element (16).

7. A vehicle safety device according to any of claims 2 to 6, **characterised in that** a pressure element (26) and a tension element (28) are provided and are so dimensioned and pivotably interconnected that they are near a dead centre position of the toggle mechanism when the actuator element (16) is in the prestressed position.

8. A vehicle safety device according to any of claims 2 to 7, **characterised in that** a locking device (24) is provided with a rotary latch (36) whereby the pressure element (26) and/or the tension element (28) can be held in the prestressed position of the tappet (16).

9. A vehicle safety device according to any of claims 1 to 8, **characterised in that** the pressure accumulator (22) is a spring element.

10. A vehicle safety device according to any of claims 1 to 9, **characterised in that** a number of actuator elements (16) and associated locking devices (24) are provided and can be almost simultaneously triggered by at least one Bowden cable (66; 68).

11. A component of the skin of a vehicle, especially a bonnet (12) of a motor vehicle, comprising a vehicle safety device (10) according to any of claims 1 to 10.

## Revendications

1. Dispositif de sécurité pour véhicule (10), comprenant
- au moins un élément d'actionneur (16), en particulier un poussoir, pour déplacer une pièce de la carrosserie d'un véhicule lors d'un choc, en particulier pour soulever un capot (12) d'un véhicule automobile en cas de heurt d'une personne,
- une butée (18) à appuyer contre le véhicule sur laquelle l'élément d'actionneur (16) est monté de façon déplaçable,
- un accumulateur de poussée (22) pour déplacer l'élément d'actionneur (16), et
- un dispositif de verrouillage (24), avec lequel l'élément d'actionneur (16) peut être bloqué dans une position précontrainte,
**caractérisé en ce qu'**
un dispositif de rappel (42) déplace l'élément d'actionneur (16) dans sa position précontrainte par une ouverture suivie d'une fermeture de la pièce, respectivement du capot (12) du véhicule.

2. Dispositif de sécurité pour véhicule (10) selon la revendication 1,
**caractérisé en ce que**
le dispositif de verrouillage (24) est formé par un élément de poussée (26) monté de façon pivotante sur la butée (18) et un élément de traction (28) articulé à l'élément d'actionneur (16), ces deux éléments (26, 28) étant en outre articulés l'un à l'autre à la manière d'un mécanisme de levier à genouillère.

3. Dispositif de sécurité pour véhicule selon la revendication 1 ou 2,
**caractérisé en ce qu'**
un dispositif de rappel (42) avec un engrenage présente une démultiplication, de telle manière que la force de poussée nécessaire au rappel de l'accumulateur de poussée (22) soit faible par rapport à celle de l'accumulateur de poussée (22), et il permet à l'élément de poussée (26) en particulier de pivoter.

4. Dispositif de sécurité pour véhicule selon l'une quelconque des revendications 1 à 3,
**caractérisé en ce qu'**
un dispositif de rappel (42) avec un élément de roulement (46), en particulier une roue dentée, pivote avec un levier (44) et engrène avec une piste de roulement pivotante, en particulier une couronne dentée (48), sur un ou l'élément de poussée (26).

5. Dispositif de sécurité pour véhicule selon la revendication 4,
**caractérisé en ce qu'**
un embrayage sépare l'assemblage de transmission de couple de rotation entre le levier (44) et l'élément de roulement (46), au moins pendant le déploiement de l'élément d'actionneur (16).

6. Dispositif de sécurité pour véhicule selon la revendication 4 ou 5,
**caractérisé en ce qu'**
un levier (44), respectivement un mécanisme le mettant en mouvement (50), peut être déployé après un déploiement pratiquement total de l'élément d'actionneur (16).

7. Dispositif de sécurité pour véhicule selon l'une quelconque des revendications 2 à 6,
**caractérisé en ce qu'**
un élément de poussée (26) et un élément de traction (28) sont dimensionnés et articulés l'un à l'autre de telle façon qu'ils se trouvent tout près d'un point mort du mécanisme de levier à genouillère dans la position précontrainte de l'élément d'actionneur (16).

8. Dispositif de sécurité pour véhicule selon l'une quelconque des revendications 2 à 7,
**caractérisé en ce qu'**
un dispositif de verrouillage (24) avec un loquet rotatif (36) fixe l'élément de poussée (26) et/ou l'élément de traction (28) peut être fixé dans la position précontrainte du poussoir (16).

9. Dispositif de sécurité pour véhicule selon l'une quelconque des revendications 1 à 8,
**caractérisé en ce que**
l'accumulateur de poussée (22) est un ressort.

10. Dispositif de sécurité pour véhicule selon l'une quelconque des revendications 1 à 9,
**caractérisé en ce que**
plusieurs éléments d'actionneur (16) avec des dispositifs de verrouillage associés (24) sont déclenchés pratiquement au même instant à l'aide d'au moins un câble Bowden (66; 68).

11. Pièce de la carrosserie d'un véhicule, en particulier capot (12) d'un véhicule automobile, avec un dispositif de sécurité pour véhicule (10) selon l'une quelconque des revendications 1 à 10.
